# EUROPÄISCHE PATENTANMELDUNG

(11) **EP 1 010 954 A1**
(43) Veröffentlichungstag der Anmeldung: **21.06.2000**
(21) Anmeldenummer: 99109966.4
(22) Anmeldetag: 20.05.1999
(51) Int. Cl.: F25B 27/02

(54) **Verfahren und Vorrichtung zum Abkühlen eines Gasstromes**

(30) Priorität: 18.12.1998 DE 19858687
(71) Anmelder: Linde Aktiengesellschaft, 65189 Wiesbaden (DE)
(72) Erfinder: Riesch, Peter Dr.rer.nat., 83646 Bad Tölz (DE)
(74) Vertreter: Kasseckert, Rainer

(57) **Zusammenfassung**

Verfahren zum Abkühlen eines Gasstromes, bei dem der Gasstrom in mindestens einer Verdichterstufe (V₁,V₂,V₃) verdichtet wird, in mindestens einer ersten Kühlstufe (3,6,9) Wärme abgibt, und in mindestens einer zusätzlichen Kühlstufe (4,5,7,8,10,11) durch indirekten Wärmeaustausch mit einem Fluid abgekühlt wird, wobei in der (den) ersten Kühlstufe(n) (3,6,9) Wärme von dem Gasstrom auf eine Absorptionsmaschine (20) übertragen wird und als Energie für den Betrieb der Absorptionsmaschine (20) benutzt und das Fluid der zusätzlichen Kühlstufe(n) (5,8,11) durch ein Arbeitsmittel der Absorptionsmaschine (20) und/oder durch einen Kälteträger, der seinerseits gegen das Arbeitsmittel einer Absorptionsmaschine (20) abgekühlt wird, gebildet. Die erste(n) Kühlstufe(n) (3,6,9) ist (sind), zur Wärmeabgabe aus dem Gasstrom für einen Betrieb eines Kältekreislaufes einer Absorptionsmaschine (20), an die Absorptionsmaschine (20) angeschlossen und die zweite Kühlstufe (5,8,11) weist ein Mittel zur Übertragung von Kälte von der Absorptionsmaschine (20) auf den Gasstrom auf.

## Beschreibung

Die Erfindung betrifft ein Verfahren zum Abkühlen eines Gasstromes, bei dem der Gasstrom in mindestens einer Verdichterstufe verdichtet wird, in mindestens einer ersten Kühlstufe Wärme abgibt, und in mindestens einer zusätzlichen Kühlstufe durch indirekten Wärmeaustausch mit einem Fluid abgekühlt wird.

Die Erfindung betrifft außerdem eine Vorrichtung zum Abkühlen eines Gasstromes mit mindestens einer Verdichterstufe für den Gasstrom, mindestens einer ersten Kühlstufe für eine Wärmeabgabe aus dem Gasstrom und mindestens einer zusätzlichen Kühlstufe zum indirekten Wärmeaustausch mit einem Fluid.

Die Begriffe "Gasstrom", "Kältemittel" und "Kälteträger" seien jeweils dahingehend zu verstehen, daß sie aus einer oder mehreren Komponenten bestehen können. Mit "Austausch" gebildete Begriffe bezeichnen einen Wärmeaustausch.

Die Abkühlung von ein- oder mehrstufig zu verdichtenden und/oder verdichteten Gasströmen, wie z. B. der einer kryogenen Luftzerlegungsanlage zugeführten Einsatzluft, erfolgt in der Regel gegen anzuwärmende Prozeßströme, mit Hilfe von Kühlmedien wie Umgebungsluft oder Kühlwasser und auch mit Hilfe von Kompressionskälteanlagen. Der Einsatz von Kompressionskälteanlagen ist jedoch nachteilig, da die von der Kompressionskälteanlage verbrauchte mechanische/elektrische Energie sich mit der am Hauptverdichter eingesparten elektrischen Energie etwa die Waage hält, also in der Summe kaum eine Einsparung erzielbar ist.

Aus DE 31 14 842 ist ein Verfahren zur Luftzerlegung durch Tieftemperaturrektifikation bekannt, bei dem zu verdichtende Luft durch Absorptionskälte vorgekühlt und die Verdichtung mit Hilfe von in einem Rankine Prozeß gewonnener mechanischer Energie erfolgt, wobei zum Antrieb der Absorptionskältemaschine und des Rankine Prozesses Abwärme aus einem Hüttenwerk verwendet wird. Die Abwärmenutzung zur Erzeugung von mechanischer Antriebsenergie erfordert wegen des geringen spezifischen Exergiegehaltes große Abwärmemengen, die nur in Ausnahmefällen verfügbar oder wirtschaftlich nutzbar sind. Auch die zusätzliche Nutzung solcher importierter Abwärme zur Kälteerzeugung ist auf eine permanente Verfügbarkeit der Abwärme angewiesen. Diese kombinierte Nutzung von externer Abwärme ist außerdem apparativ sehr aufwendig und besitzt den Nachteil, daß bei der Bereitstellung verdichteter Luft der Wärmebedarf und die Investition für die Absorptionskältemaschine günstiger zur Vergrößerung des Rankine-Prozesses als zur Vorkühlung der zu verdichtenden Luft verwendet wird.

Aufgabe der vorliegenden Erfindung ist es, ein Verfahren sowie eine Vorrichtung zum Abkühlen eines Gasstromes anzugeben, das (bzw. die) die Betriebskosten im Vergleich zu den zum Stand der Technik zählenden Verfahren und Vorrichtungen verringert und dabei die Abhängigkeit von großen externen Abwärmequellen vermeidet.

Dies wird entsprechend dem erfindungsgemäßen Verfahren dadurch erreicht, daß in der (den) ersten Kühlstufe(n) Wärme von dem Gasstrom auf eine Absorptionsmaschine übertragen und als Energie für den Betrieb der Absorptionsmaschine benutzt wird und das Fluid der zusätzlichen Kühlstufe(n) durch ein Arbeitsmittel der Absorptionsmaschine und/oder durch einen Kälteträger, der seinerseits gegen das Arbeitsmittel einer Absorptionsmaschine abgekühlt wird, gebildet wird. Der Gasstrom wird hierbei beispielsweise vor und/oder nach dem Verdichten und/oder zwischen je zwei Stufen der Verdichtung abgekühlt.

Bei der erfindungsgemäßen Vorrichtung ist (sind) die erste(n) Kühlstufe(n), zur Wärmeabgabe aus dem Gasstrom für einen Betrieb eines Kältekreislaufes einer Absorptionsmaschine, an die Absorptionsmaschine angeschlossen und die zusätzliche(n) Kühlstufe(n) weist (weisen) ein Mittel zur Übertragung von Kälte von der Absorptionsmaschine auf den Gasstrom auf.

Absorptionsmaschinen sind seit langem bekannt; siehe z. B. die Absorptionskältemaschine in Ullmanns Encyklopädie der technischen Chemie, Verfahrenstechnik und Reaktionsapparate, 4. Auflage, Band 3, Seite 195 ff., Verlag Chemie, Weinheim/Bergstraße. Der Vorteil von Absorptionskältemaschinen gegenüber Kompressionskälteanlagen besteht in erster Linie darin, daß bei einer Absorptionskältemaschine auf den Einsatz eines Verdichters, der bei einer Kompressionskälteanlage für die Verdichtung des Kältemittels benötigt wird, verzichtet werden kann. Der "Antrieb" einer Absorptionskältemaschine erfolgt, indem in einem sog. Austreiber bzw. Generator durch Wärmezufuhr eine Trennung des Arbeitsmittelpaares in das Kältemittel und das Absorptionsmittel vorgenommen wird. Aus Verfügbarkeitsgründen ist es vorteilhaft, wenn erfindungsgemäß als Wärmezufuhr eine interne Wärmequelle aus dem eigenen Prozeß genutzt wird.

Das erfindungsgemäße Verfahren weiterbildend wird vorgeschlagen, daß die Absorptionsmaschine je nach Anforderungen an die Abkühlung ein- oder mehrstufig ausgebildet ist.

Das Arbeitsmittel kann ein Gemisch aus einem Niederdruckkältemittel und einem Absorptionsmittel enthalten, z. B. Wasser oder Alkohol, und ein Absorptionsmittel, vorzugsweise eine wässrige Salzlösung.

Das Arbeitsmittel kann ein Gemisch aus einem Hochdruckkältemittel und einem Absorptionsmittel enthalten, vorzugsweise Ammoniak oder R134a, und ein Absorptionsmittel.

Werden Kälteträgerkreisläufe vorgesehen, so werden als Kälteträger vorzugsweise Wasser und/oder wässrige Lösungen, wie z. B. Ethylenglykol/Wasser-Mischungen oder niedrigviskose Salzlösungen, verwendet.

Die erfindungsgemäße Vorrichtung weiterbildend wird vorgeschlagen, daß das Mittel zum Abkühlen des Gasstromes einen Wärmeaustauscher aufweist.

Das Mittel zum Abkühlen des Gasstromes kann einen Kälteträgerkreislauf aufweisen.

Der Wärmeaustauscher kann zum Übertragen von Kälte durch indirekten Wärmeaustausch von dem Kältemittelkreislauf auf den Gasstrom ausgebildet sein.

Der Wärmeaustauscher kann zum Übertragen von Kälte durch indirekten Wärmeaustausch von dem Kälteträgerkreislauf auf den Gasstrom ausgebildet sein.

Der Kälteträgerkreislauf kann einen Wärmeaustauscher zum Übertragen von Kälte durch indirekten Wärmeauschtausch von dem Kältemittelkreislauf auf den Kälteträgerkreislauf führen.

Die Absorptionsmaschine kann wenigstens eine Generator/Kondensator-Austauscheinheit (G/K) und wenigstens eine Verdampfer/Absorber-Austauscheinheit (V/A) enthalten und mindestens eine der Austauscheinheiten (G/K, V/A), vorzugsweise jedoch beide Austauscheinheiten (G/K, V/A), können als Plattenwärmetauscher ausgebildet sein.

Plattenaustauscher sind ohne weitere Engineeringkosten über einen größeren Leistungsbereich von z.B. 300 bis 1000 kW skalierbar. Sie benötigen nur ein geringes Druckgefälle zur Erzeugung des Wärmeübergangs sowie bei ggf. erforderlichen Umlenkungen für die Durchströmung der Absorberkomponenten, was insbesondere bei gasförmigen Medien wichtig ist und Energiekosten spart. Erst in Plattentauschem ist mit Gasen ein Wärmeübergang mit einer so geringen treibenden Temperaturdifferenz zu bewerkstelligen, daß ein noch ausreichendes Temperaturgefälle für die Nutzung in der Absorptionsmaschine übrig bleibt, wie das z.B. bei mehreren Druckstufen eines Verdichters der Fall ist.

In Plattenbauweise kann über einen weiten Leistungsbereich ein und das selbe Grund-Design eingesetzt werden. lnsbesonders zeigen Plattenwärmetauscher aufgrund ihrer einfachen Skalierbarkeit auch erhebliche Vorteile bei der Passageneinteilung für die Durchströmung einer Absorberkomponente (Generator, Verdampfer) mit mehreren Medienströmen, wie das z. B. bei mehreren Druckstufen eines Verdichters der Falls ist.

Plattenwärmetauscher können kostengünstig berippt werden und so der gasseitige Wärmeübergang wesentlich verbessert werden. Zudem ist durch die Berippung auch auf der Seite der Arbeitsmittel des Absorbers mit einer Verbesserung des Wärmeübergangs zu rechnen. Eine kompakte Hintereinanderschaltung mehrerer Absorberkomponenten ist ohne Rohrleitungen und deshalb mit geringstmöglichem Druckabfall realisierbar.

Die Absorptionsmaschine kann Mittel zum Zu- und Abführen wenigstens eines Kühlmediums sowie des zu kühlenden Mediums und/oder wenigstens eines Kälteträgers aufweisen (31, 33).

Zwischen der oder den Generator/Kondensator-Austauscheinheiten (G/K) und der oder den Verdampfer/Absorber-Austauscheinheiten (V/A) kann wenigstens ein Kühler (E) angeordnet sein.

Der Kühler (E) kann als Plattenwärmetauscher ausgebildet sein.

Der Kühler kann (E) Mittel zum Zu- und Abführen wenigstens eines Kühlmediums aufweisen (30, 32).

Zwischen den Austauscheinheiten (G/K, V/A) und/oder zwischen den Austauscheinheiten (G/K, V/A) und dem Kühler (E) können wärmeleitende Barrieren angeordnet sein.

Die wärmeleitenden Barrieren können mit schlecht wärmeleitenden Materialien, beispielsweise als leerer Spalt oder als Spalt mit Dichtung aus Faser- oder Kunststoffen, ausgebildet sein.

Die Absorptionsmaschine kann ein Niederdruckkältemittel oder Hochdruckkältemittel aufweisen.

Das erfindungsgemäße Verfahren und die erfindungsgemäße Vorrichtung zum Abkühlen eines ein- oder mehrstufig verdichteten Gasstromes seien anhand von drei Figuren näher erläutert.
- Figur 1: zeigt eine Ausführung des erfindungsgemäßen Verfahrens zur Abkühlung eines Gasstromes.
- Figur 2: zeigt eine Absorptionskältemaschine nach dem Stand der Technik
- Figur 3: zeigt eine bevorzugte Ausgestaltung der Absorptionskältemaschine für das erfindungsgemäße Verfahren.

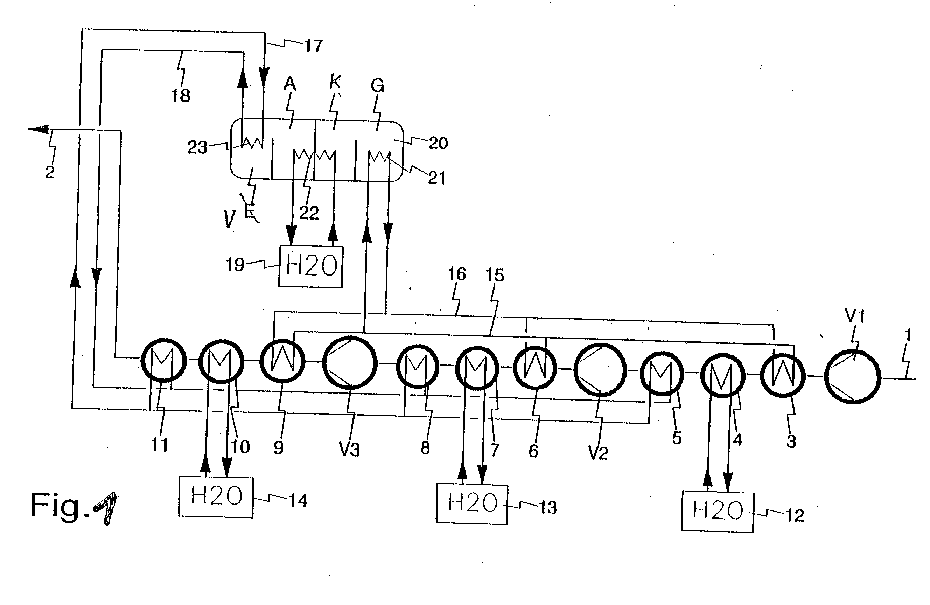

In der Figur 1 ist eine dreistufige Verdichtung eines Gasstromes dargestellt. Der zu verdichtende Gasstrom durchläuft vor seiner Verdichtung ggf. erforderliche Vorbehandlungsschritte, die in der Figur nicht dargestellt sind. Der zu verdichtende Gasstrom wird über Leitung 1 dem dreistufigen Verdichter - dargestellt durch die Verdichterstufen V1, V2 und V3 - zugeführt. Den Verdichterstufen V1 bis V3 sind jeweils drei Wärmetauscher 3 bis 5, 6 bis 8 und 9 bis 11 nachgeschaltet.

Der in der ersten Verdichterstufe V1 verdichtete Gasstrom, der z. B. auf einen Druck von 2,2 bar verdichtet ist und eine Temperatur von 130 °C aufweist, wird in dem Wärmetauscher 3 gegen den Wärmeträger des Heizkreislaufes 15 und 16 auf eine Temperatur von 80 °C abgekühlt. Dem Wärmetauscher 3 ist ein zweiter Wärmetauscher 4 nachgeschaltet, in dem der verdichtete Gasstrom gegen einen Kühlwasserkreislauf 12 auf eine Temperatur von 40 °C abgekühlt wird. In dem Wärmetauscher 5 wird der verdichtete Gasstrom gegen den Kälteträger des Kühlkreislaufes 17 und 18 auf eine Temperatur von 5 °C abgekühlt.

Analog zu der beschriebenen Verfahrensweise, wie sie im Anschluß an die erste Verdichterstufe V1 realisiert wird, wird der verdichtete Gasstrom nach der zweiten und dritten Verdichterstufe V2 bzw. V3 gegen die Kälteträger des Heiz- und Kühlkreislaufes sowie gegen Kühlwasser der Kühlwasserkreisläufe 13 und 14 abgekühlt. Daran anschließend wird der verdichtete und abgekühlte Gasstrom über Leitung 2 einer weiteren Verwendung zugeführt.

Die bereits erwähnten Kühlwasserkreisläufe 12 bis 14 sowie der noch zu beschreibende Kühlwasserkreislauf 19 können selbstverständlich auch durch eine Kühlung unter Verwendung anderer Medien als Wasser, beispielsweise Umgebungsluft, ersetzt werden. Mit Umgebungsluft zum Kühlen kann in einer Anlage mit dem erfindungsgemäßen Verfahren und mit der erfindungsgemäßen Vorrichtung auf einen Naßkühlturm verzichtet werden.

Die in der Figur 1 dargestellte Absorptionskältemaschine 20 weist bei der einstufigen Ausführung im wesentlichen zumindest vier Bereiche auf. Diese sind: Austreiber bzw. Generator G, Kondensator K, Absorber A und Verdampfer V. Der im Heizkreislauf 15 und 16 zirkulierende Wärmeträger erwärmt über den Wärmetauscher 21 das Arbeitsmittel - beispielsweise Ammoniak/ Wasser oder Wasser/Lithiumbromidlösungder Absorptionsmaschine 20.

Das im Generator G ausgetriebene Kältemittel - also Ammoniak im Falle des Arbeitsmittelpaares Ammoniak/Wasser und Wasser im Falle des Arbeitsmittelpaares Wasser/Lithiumbromidlösung - wird im Kondensator K gegen das durch den Wärmetauscher 22 strömende Kühlwasser eines Kühlwasserkreislaufes 19 verflüssigt. Die in dem Absorber A der Absorptionskältemaschine 20 anfallende Wärme wird ebenfalls über den bereits genannten Kühlwasserkreislauf 19 abgeführt. Im Wärmetausch mit dem Kälteträger des Kühlkreislaufes 17 und 18 über den Wärmetauscher 23 wird das Kältemittel der Absorptionskältemaschine 20 verdampft, wodurch der in dem Kühlkreislauf zirkulierende Kälteträger abgekühlt wird.

Bei der in der Figur 1 dargestellten Ausgestaltung des erfindungsgemäßen Verfahrens erfolgt die Beheizung der Absorptionsmaschine 20 durch den verdichteten und abzukühlenden Gasstrom über den als Heizkreislauf 15 und 16 bezeichneten Wärmeträgerkreislauf. Auf die Zwischenschaltung eines derartigen Heizkreislaufes kann dann verzichtet werden, wenn nach jeder Verdichterstufe der verdichtete und abzukühlende Gasstrom, oder ein Teil des Gasstromes, direkt zur Wärmeabgabe an den Generator G der Absorptionsmaschine 20 verwendet wird.

Zur Deckung bzw. Bereitstellung der für die Absorptionsmaschine 20 benötigten Betriebsenergie, also der über den Wärmetauscher 21 zugeführten Energie, können selbstverständlich auch - alternativ oder zusätzlich - andere, auf einem entsprechenden Temperaturniveau anfallende Prozeßströme aus einer Anlage mit dem abzukühlenden und zu verdichtendem Gasstrom verwendet bzw. mitverwendet werden.

Ebenso kann auf den als Kälteträgerkreislauf ausgebildeten Kühlkreislauf 17 und 18 verzichtet werden, sofern der verdichtete und abzukühlende Gasstrom, oder ein Teil des Gasstromes, direkt zur Wärmeabgabe an den Verdampfer V der Absorptionskältemaschine 20 verwendet wird.

Die in der Figur 1 dargestellte Verschaltung von Verdichterstufen und Wärmetauschern eignet sich insbesondere z. B. für die Verdichtung und Nach- bzw. Zwischenkühlung von Luft, die anschließend einer kryogenen Luftzerlegungsanlage zugeführt wird.

Abhängig von der Art und Zusammensetzung der zu verdichtenden Gasströme sowie von den jeweiligen Temperatumiveaus nach den einzelnen Verdichterstufen kann unter Umständen auf einige der in der Figur 1 dargestellten Wärmeübergänge verzichtet werden.

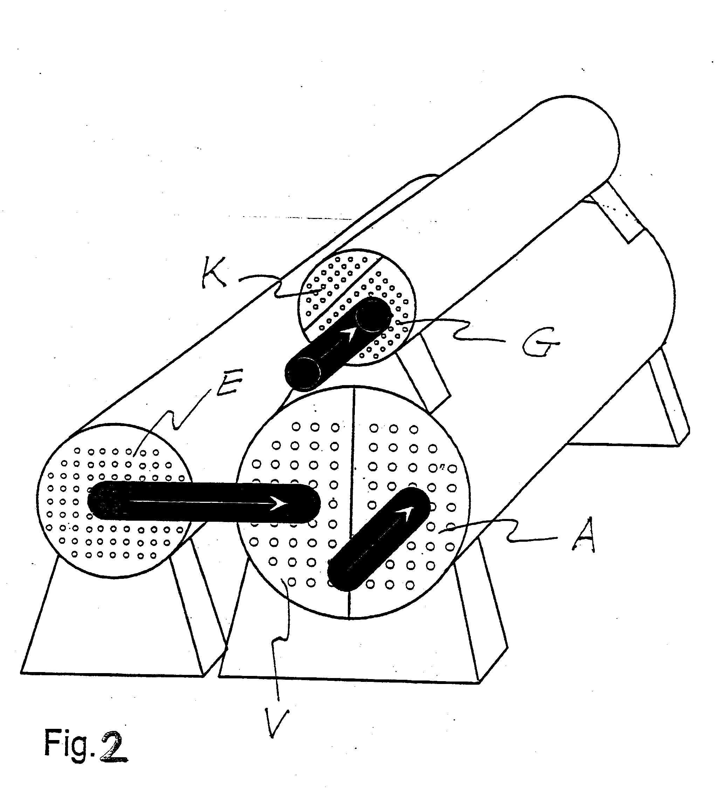

Eine zum Stand der Technik zählende Absorptionskältemaschine sei anhand der Figur 2 (Stand der Technik gemäß Fa. CARRIER) näher erläutert. Derartige Absorptionskältemaschinen bestehen aus einer Generator/Kondensator-Austauscheinheit G/K und einer Verdampfer/Absorber-Austauscheinheit V/A. Die Austauscheinheiten G/K und V/A sind hierbei als Rohrbündelwärmetauscher ausgebildet. Im Regelfall wird zusätzlich ein ebenfalls als Rohrbündelwärmetauscher ausgebildeter Kühler (E) vorgesehen.

Das abzukühlende Medium (Gas, viskose Flüssigkeiten) wird im einfachsten Fall einer einstufigen Absorptionskältemaschine der Reihe nach vom Generator über Kühler zum Verdampfer abgekühlt. Zur Abgabe der Abwärme aus der Absorptionskältemaschine kann Kühlwasser eines Kühlturms oder insbesondere bei Plattenapparaten auch die Umgebungsluft herangezogen werden.

Nachteilig bei der in der Figur 2 beschriebenen Absorptionskältemaschine ist jedoch, daß insbesondere bei gasförmigen Medien oder auch hochviskosen Medien die Wärmeübergänge sehr gering sind. Die Wärmeübergänge können prinzipiell durch Berippung verbessert werden, was jedoch bei Rohrbündelwärmetauschem mit relativ hohen Kosten verbunden ist. Glatte Rohrbündelwärmetauscher ergeben unter gleichen thermischen Randbedingungen erheblich höhere Druckverluste, wodurch ein Großteil der mit der Absorptionsmaschine erzielten Energieeinsparungen wieder aufgezehrt wird. Zudem sind Absorptionsmaschinen mit Austauscheinheiten in Rohrbündelbauweise nur unter erhöhten Engineeringkosten in ihrer Leistungsgröße skalierbar. Bei Hintereinanderschaltung von Absorberkomponenten (Generator, Verdampfer) in Röhrenbündel-Bauweise ergeben sich weitere Nachteile, wie große Baulänge oder Umlenkungen.

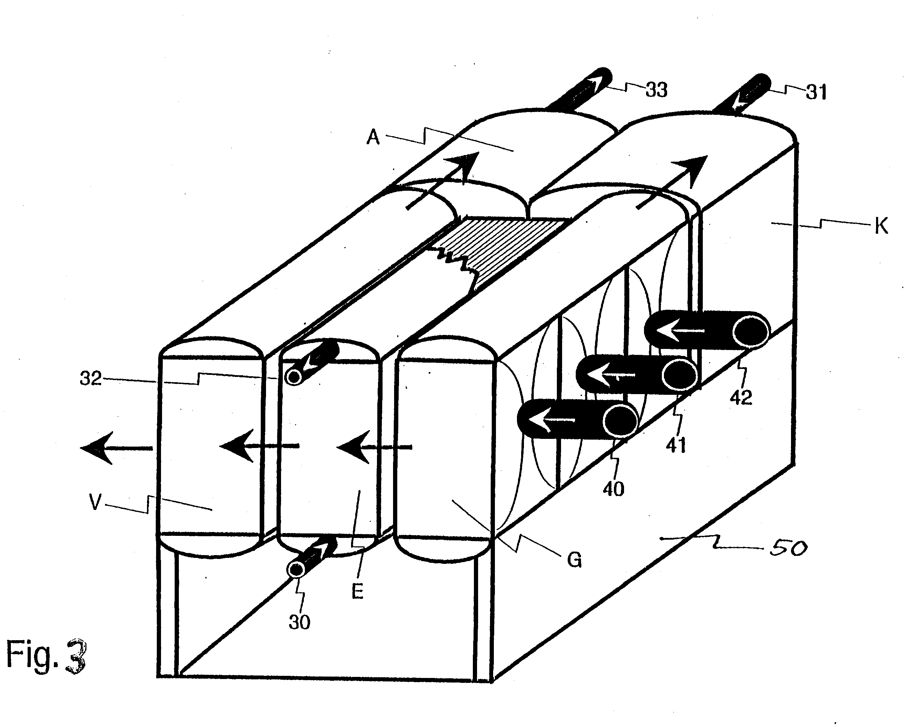

Eine mögliche Ausführungsform der Absorptionsmaschine für das erfindungsgemäße Verfahren und die Vorrichtung hierfür sei im folgenden anhand der Figur 3 näher erläutert. Diese Absorptionskältemaschine besteht aus einer Generator/Kondensator-Austauscheinheit G/K, einer Verdampfer/Absorber-Austauscheinheit V/A sowie einem Kühler E. Es können auch mehrere Generator/Kondensator-Austauscheinheiten, mehrere Verdampfer/Absorber-Austauscheinheiten und/oder mehrere Kühler verschaltet werden. Alle genannten Komponenten ruhen auf einem Sockel 50.

Über geeignet angebrachte Zu- und Abführleitungen 30 und 31 bzw. 32 und 33 werden dem Kühler E sowie den Austauscheinheiten G/K und V/A Kühlmedien, wie bspw. Kühlwasser und/oder Umgebungsluft, zu- und abgeführt, wobei bei ausreichendem verfügbarem Temperaturgefälle auf einen Naßkühlturm verzichtet werden kann.

Die Absorptionsmaschine kann einen Niederdruck- oder ein Hochdruckkältemittel aufweisen.

Die in der Figur 3 dargestellte Absorptionsmaschine ist z. B. für die Nach- bzw. Zwischenkühlung eines dreistufig verdichteten Gasstromes geeignet. Sie weist zu diesem Zweck drei Zuführleitungen 40 bis 42 auf - die Abführleitungen sind der Übersichtlichkeit halber nicht dargestellt -, wobei die Zuführleitungen 40 bis 42 jeweils zu den Auslässen der Verdichterstufen V1 bis V3 korrespondieren können. Unter dem Begriff "korrespondieren" sei zu verstehen, daß entweder der verdichtete Gasstrom selbst durch die erfindungsgemäße Absorptionsmaschine geführt und abgekühlt wird oder die Abkühlung des verdichteten Gasstromes über einen Kältemittel- oder Kälteträgerkreislauf erfolgt.

Zwischen dem Kühler E und den beiden Austauscheinheiten G/K bzw. V/A kann eine in der Figur 3 nicht dargestellte, wärmeleitende Barriere vorgesehen werden.

Bei der gezeigten Absorptionsmaschine sind die Austauscheinheiten G/K und V/A sowie der Kühler E als Plattenwärmetauscher ausgebildet. Gegenüber den bekannten Konstruktionen, bei denen Rohrbündelwärmetauscher Verwendung finden, ermöglichen die Plattenwärmetauscher durch Schaffung kostengünstiger Rippenstrukturen deutlich bessere Wärmeübergänge auf der Seite des verdichteten Gasstromes wie auch der Arbeitsmittelströme der Absorptionsmaschine. Die kompakte Bauweise der in der Figur 3 dargestellten Absorptionsmaschine ermöglicht es zudem, die Verrohrungskosten in erheblichem Umfang zu verringern.

Mit dem erfindungsgemäßen Verfahrens sowie der erfindungsgemäßen Vorrichtung zum Abkühlen eines ein- oder mehrstufig verdichteten Gasstromes läßt sich eine Stromeinsparung von ca. 7 % erreichen.

## Patentansprüche

1. Verfahren zum Abkühlen eines Gasstromes, bei dem der Gasstrom
- in mindestens einer Verdichterstufe verdichtet wird,
- in mindestens einer ersten Kühlstufe Wärme abgibt,
- und in mindestens einer zusätzlichen Kühlstufe durch indirekten Wärmeaustausch mit einem Fluid abgekühlt wird,
**dadurch gekennzeichnet**, daß
- in der (den) ersten Kühlstufe(n) Wärme von dem Gasstrom auf eine Absorptionsmaschine übertragen und als Energie für den Betrieb der Absorptionsmaschine benutzt wird
- und das Fluid der zusätzlichen Kühlstufe(n) durch ein Arbeitsmittel der Absorptionsmaschine und/oder durch einen Kälteträger, der seinerseits gegen das Arbeitsmittel einer Absorptionsmaschine abgekühlt wird, gebildet wird.

2. Verfahren nach Anspruch 1, dadurch gekennzeichnet, daß die
Absorptionsmaschine einstufig ausgebildet ist.

3. Verfahren nach Anspruch 1, dadurch gekennzeichnet, daß die
Absorptionsmaschine mehrstufig ausgebildet ist.

4. Verfahren nach einem der Ansprüche 1 bis 3, dadurch gekennzeichnet, daß das Arbeitsmittel ein Gemisch aus einem Niederdruckkältemittel und einem Absorptionsmittel enthält.

5. Verfahren nach einem der Ansprüche 1 bis 3, dadurch gekennzeichnet, daß das Arbeitsmittel ein Gemisch aus einem Hochdruckkältemittel und einem Absorptionsmittel enthält.

6. Verfahren nach einem der Ansprüche 1 bis 5, dadurch gekennzeichnet, daß als der Kälteträger Wasser und/oder wässrige Lösungen verwendet werden.

7. Vorrichtung zum Abkühlen eines Gasstromes mit
- mindestens einer Verdichterstufe für den Gasstrom
- mindestens einer ersten Kühlstufe für eine Wärmeabgabe aus dem Gasstrom und
- mindestens einer zusätzlichen Kühlstufe zum indirekten Wärmeaustausch mit einem Fluid,
dadurch gekennzeichnet, daß
- die erste(n) Kühlstufe(n), zur Wärmeabgabe aus dem Gasstrom für einen Betrieb eines Kältekreislaufes einer Absorptionsmaschine, an die Absorptionsmaschine angeschlossen ist und
- die zusätzliche(n) Kühlstufe(n) ein Mittel zur Übertragung von Kälte von der Absorptionskältemaschine auf den Gasstrom aufweist (aufweisen).

8. Vorrichtung nach Anspruch 7, dadurch gekennzeichnet, daß das Mittel zum Abkühlen des Gasstromes einen Wärmeaustauscher aufweist.

9. Vorrichtung nach Anspruch 7 oder 8, dadurch gekennzeichnet, daß das Mittel zum Abkühlen des Gasstromes einen Kälteträgerkreislauf aufweist.

10. Vorrichtung nach Anspruch 8, dadurch gekennzeichnet, daß der Wärmeaustauscher zum Übertragen von Kälte durch indirekten Wärmeaustausch von dem Kältekreislauf auf den Gasstrom ausgebildet ist.

11. Vorrichtung nach Anspruch 8, dadurch gekennzeichnet, daß der
Wärmeaustauscher zum Übertragen von Kälte durch indirekten Wärmeaustausch von einem Kälteträgerkreislauf auf den Gasstrom ausgebildet ist.

12. Vorrichtung nach Anspruch 11, dadurch gekennzeichnet, daß der Kälteträgerkreislauf einen Wärmeaustauscher zum Übertragen von Kälte von dem Kältekreislauf auf den Kälteträgerkreislauf führt.

13. Vorrichtung nach einem der Ansprüche 7 bis 12, dadurch gekennzeichnet, daß die Absorptionskältemaschine wenigstens eine Generator/Kondensator-Austauscheinheit (G/K) und wenigstens eine Verdampfer/Absorber-Austauscheinheit (V/A) enthält und mindestens eine der Austauscheinheiten (G/K, V/A) als Plattenwärmetauscher ausgebildet ist.

14. Vorrichtung nach Anspruch 13, dadurch gekennzeichnet, daß die Absorptionskältemaschine Mittel zum Zu- und Abführen wenigstens eines Kühlmediums sowie des zu kühlenden Mediums und/oder wenigstens eines Kälteträgers aufweist (31, 33).

15. Vorrichtung nach Anspruch 13 oder 14, dadurch gekennzeichnet, daß zwischen der oder den Generator/Kondensator-Austauscheinheiten (G/K) und der oder den Verdampfer/Absorber-Austauscheinheiten (V/A) wenigstens ein Kühler angeordnet (E) ist.

16. Vorrichtung nach Anspruch 15, dadurch gekennzeichnet, daß der Kühler (E) als Plattenwärmetauscher ausgebildet ist.

17. Vorrichtung nach Anspruch 15 oder 16, dadurch gekennzeichnet, daß der Kühler (E) Mittel zum Zu- und Abführen wenigstens eines Kühlmediums aufweist (30, 32).

18. Vorrichtung nach einem der Ansprüche 13 bis 17, dadurch gekennzeichnet, daß zwischen den Austauscheinheiten (G/K, V/A) und/oder zwischen den Austauscheinheiten (G/K, V/A) und dem Kühler (E) eine wärmeleitende Barriere angeordnet ist.

19. Vorrichtung nach Anspruch 18, dadurch gekennzeichnet, daß die wärmeleitende Barriere mit schlecht wärmeleitenden Materialien, als leerer Spalt oder als Spalt mit Dichtung aus Faser- oder Kunststoffen, ausgebildet ist.

20. Vorrichtung nach einem der Ansprüche 13 bis 19, dadurch gekennzeichnet, daß die Absorptionsmaschine ein Niederdruckkältemittel aufweist.

21. Vorrichtung nach einem der Ansprüche 13 bis 19, dadurch gekennzeichnet, daß die Absorptionsmaschine ein Hochdruckkältemittel aufweist.
